# EUROPÄISCHE PATENTSCHRIFT

(11) **EP 1 373 647 B1**
(45) Veröffentlichungstag und Bekanntmachung des Hinweises auf die Patenterteilung: **02.06.2010**
(21) Anmeldenummer: 02722270.2
(22) Anmeldetag: 26.03.2002
(51) Int. Cl.: E03C 1/084

(54) **WASSERSTRAHLBELÜFTER (STRAHLREGLER)**
WATER JET AERATOR (JET CONTROLLER)
AERATEUR DE JET D'EAU (REGULATEUR DE JET)

(30) Priorität: 26.03.2001 DE 10115639
(43) Veröffentlichungstag der Anmeldung: 02.01.2004
(73) Patentinhaber: Hansgrohe AG, 77761 Schiltach (DE)
(72) Erfinder: DIETERLE, Joachim, 72290 Lossburg/Schömberg (DE); SCHORN, Franz, 77761 Schiltach (DE)
(74) Vertreter: Patentanwälte Ruff, Wilhelm, Beier, Dauster & Partner
(86) Internationale Anmeldenummer: PCT/EP2002/003359
(87) Internationale Veröffentlichungsnummer: WO 2002/077374

(56) Entgegenhaltungen:
- EP-A- 1 001 095
- DE-A- 19 647 798
- FR-A- 2 392 182

## Beschreibung

Die Erfindung betrifft einen Wasserstrahlbelüfter für einen Wasserauslauf einer sanitären Armatur mit einem im wesentlichen topfartigen Gehäuse aus Kunststoff, in dem eine Einrichtung zur Vermischung von Wasser und Luft angeordnet ist, wobei das Gehäuse einen mit ihm einstückig geformten Gehäuseboden aufweist, der als Strahlberuhigungseinrichtung ausgebildet ist und Wasseraustrittsöffnungen zwischen parallel zur Strömungsrichtung angeordneten Strahlbegrenzungswandunge besitzt, die am Wasseraustrittsende eine Oberfläche aus einem elastomeren Kunststoff aufweisen. Wasserstrahlbelüfter werden auch Strahlregler genannt.

Wasserstrahlbelüfter dieser Art sind aus der EP 1001095 A2 bekannt. Bei diesen Wasserstrahlbelüftern sind die in Strömungsrichtung weisenden Enden der Wandungen mit einer Oberflächenschicht aus dem elastischen Kunststoff überzogen. Durch diesen Kunststoff wird eine Kalkablagerung weitgehend verhindert. Falls sich Kalkablagerungen angesetzt haben sollten, können diese durch Abwischen entfernt werden. Die Herstellung dieser Wasserstrahlbelüfter ist verhältnismäßig kompliziert, weil bei der Herstellung die Ausformung der dünnen Oberflächenschicht hohe Anforderungen an die Passgenauigkeit der Werkzeuge stellt, da sonst der Übergang der Oberflächenschicht im Grenzbereich zum thermoplastischen Kunststoff des übrigen Gehäuses unregelmäßig ist. Ferner ist noch eine bessere Ablösbarkeit von etwaigen Kalkablagerungen erwünscht.

Die Erfindung ist **dadurch gekennzeichnet, dass** die Strahlbegrenzungswandungen mindestens im Bereich des Wasseraustritts über ihre gesamte Wandstärke massiv aus dem elastomeren Kunststoff ausgebildet und einstückig mit dem Gehäuse geformt sind und der restliche Teil des Gehäuses aus einem formsteifen Thermoplasten mit einer Shore A Härte von > 90 besteht.

Durch diese massive Ausbildung der Wandungsenden lassen sich Spritzfehler bei der Herstellung der Oberfläche aus dem elastischen Kunststoff vermeiden, was insbesondere von Vorteil ist, wenn als solcher Kunststoff Silikon verwendet wird, das beim Spritzvorgang außerordentlich dünnflüssig ist. Ferner lassen sich die Wandungsenden, da sie massiv aus dem elastomeren Kunststoff ausgebildet sind, deutlich hin und her bewegen, so daß auch weiter nach innen ragende Kalkablagerungen mechanisch abgelöst werden können. Vorzugsweise hat der Elastomer auch wasserabstoßende Eigenschaften, wie Silikon. Die Shore A Härte des elastomeren Kunststoffs liegt vorzugsweise bei 40 bis 80, insbesondere 55 bis 80. Geeignet sind beispielsweise gummiartige Elastomere, wie EPDM (Ethylen/Propylen-Dien-Terpolymer) oder NPR (Nitrilkautschuk), so wie die bereits erwähnten Silikone. Besonders bevorzugt sind thermoplastische Elastomere. Diese können in Form von Mischungen aus Thermoplasten und Elastomeren vorliegen, beispielsweise Polypropylen und EPDM. Es gibt auch elastisch gemachte Thermoplaste, wie die thermoplastelastomeren Polyamide, Polyolefine, Polyurethane und Styrol. Bekannt sind auch für das Zweikomponentenspritzen geeignete Kunststoffpaare aus Thermoplasten und Elastomeren beziehungsweise Thermoplastelastomeren, wobei die einzelnen Komponenten ein gutes gegenseitiges Haftvermögen besitzen. Solche Komponenten sind für die Erfindung bevorzugt, da der erfindungsgemäße Wasserstrahlbelüfter vorzugsweise nach dem Zweikomponentenspritzgußverfahren hergestellt ist.

Die Strahlbegrenzungswandungen bestehen, in Strahlrichtung gesehen, über eine Länge von mindestens 1,0 mm, insbesondere 1,5 bis 4 mm, aus dem elastomeren Kunststoff. Bei einer bevorzugten Ausführungsform der Erfindung bestehen die Wasserstrahlbegrenzungswandungen im Bereich der Wasseraustrittsöffnung über eine Länge von 1,5 bis 3 mm aus dem elastomeren Kunststoff, und der Rest des Gehäuses ist aus dem formsteifen Thermoplast gebildet, wobei beide Kunststoffe durch Zweikomponentenspritzen zu einem gemeinsamen Teil geformt sind.

Bei einer weiteren, bevorzugten Ausführungsform ist die Vermischungseinrichtung ein vom Gehäuse getrennt ausgebildetes Bauteil, das in das Gehäuse eingesetzt ist, wobei vorzugsweise inneinander greifende Elemente der Vermischungseinrichtung und des Gehäuses einen drehfesten Sitz der Vermischungseinrichtung im Gehäuse ermöglichen. Die Vermischungseinrichtung besteht stets aus einem formstabilen Thermoplasten, dessen Shore A Härte vorzugsweise > 90 insbesondere > 100 ist.

Bei einer Ausführungsform der Erfindung liegt mindestens ein Teil der Grenzflächen zwischen dem formsteifen Kunststoff des Gehäuses und dem elastomeren Kunststoff der Wandungsenden in einer zur Strömungsrichtung senkrecht liegenden Querschnittsebene. Dies ist vorzugsweise zumindest an der Wandungsoberfläche der Fall. Die Verbindungsfläche ist dadurch zwar außerordentlich gering, es hat sich gezeigt, daß diese geringe Fläche in der Regel ausreichend ist. Es kann jedoch aber auch erwünscht sein, daß mindestens ein Teil, vorzugsweise nur ein Teil, der Grenzflächen zwischen Wandungsabschnitten aus dem formsteifen, thermoplastischen Kunststoff und Wandungsabschnitten aus dem elastomeren Kunststoff größer sind, als die Querschnittsflächen durch die Wandungen. Hierzu können die Wandungen im Bereich der Grenzfläche vorzugsweise abgestuft sein, insbesondere mindestens eine Stufe aufweisen. So kann mit Vorteil die Abstufung darin bestehen, daß Wandungsabschnitte im Grenzflächenbereich auf beiden Seiten abgestuft sind, insbesondere einen gegenüber den Wandungsflächen zurückversetzten Steg an der Grenzfläche aufweisen. Auch eine stirnseitige Verzahnung ist möglich.

Bei einer besonders vorteilhaften Ausführungsform der Erfindung weisen zur Außenwand des Gehäuses gehörende Wandungsabschnitte eine vergrößerte Grenzfläche auf, wogegen zum Gehäuseboden gehörende Wandungsabschnitte im wesentlichen senkrecht zur Strömungsrichtung verlaufende Grenzflächen aufweisen, insbesondere solche die in der Querschnittsebene liegen. Somit können die, einem möglicherweise ungewollt starken mechanischen Angriff ausgesetzten Wandungsabschnitte im Bereich des Außenmantels des Gehäuses besonders gegen ein Abreißen geschützt werden, was bei den weiter innen im Topfbodenbereich liegenden Wandungsabschnitten nicht der Fall zu sein braucht.

In der Regel besteht das Gehäuse aus einem zylinderförmigen Körper. Die Wandungen können die Form von konzentrischen Kreisen besitzen, die durch radiale Stege untereinander verbunden sind.

Die getrennte Ausbildung von Gehäuse und Strahlverwirbelungseinrichtung ermöglicht eine einfache Ausgestaltung der Werkzeuge zur Herstellung des Gehäuses, was insbesondere beim Zweikomponentenspritzen von Vorteil ist. Es ist aber auch möglich, die Strahlvermischungseinrichtung insbesondere aus dem formstabilen thermoplastischen Kunststoff, gemeinsam mit dem Gehäuse zu formen.

Weitere Merkmale der Erfindung ergeben sich aus der nachfolgenden Beschreibung von bevorzugten Ausführungsformen in Verbindung mit der Zeichnung und den Unteransprüchen.

In der Zeichnung zeigen
- Fig. 1: einen Schnitt durch eine Ausführungsform der Erfindung
- Fig.2: einen Schnitt durch Gehäuse und Vermischungseinrichtung einer dritten Ausführungsform.

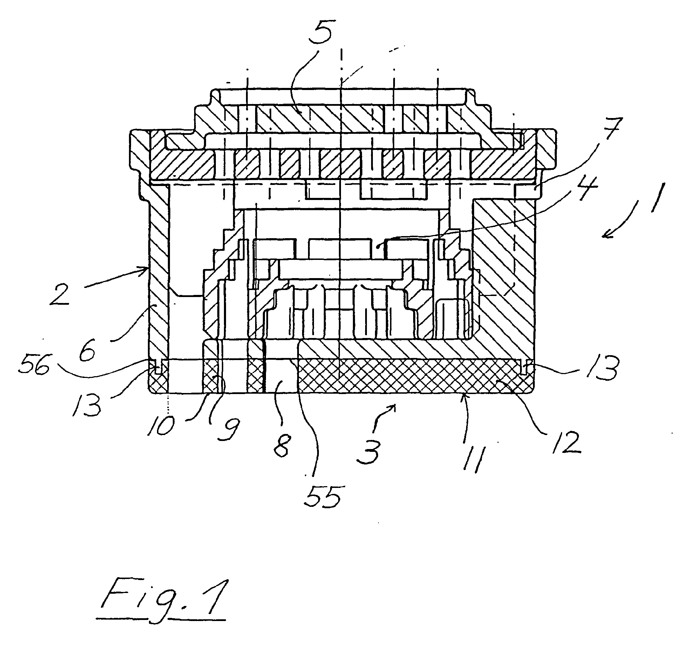

Bei der in Figur 1 dargestellten Ausführungsform der Erfindung, ist ein Wasserstrahlbelüfter 1 im Querschnitt dargestellt. Derartige Wasserstrahlbelüfter werden in der Regel auch Strahlregler genannt. Der Wasserstrahlbelüfter besitzt ein topfartiges, zylindrisches Gehäuse 2, das einen Siebboden 3 aufweist. Im Gehäuse 2 angeordnet ist eine Vermischungseinrichtung 4 zum Vermischen von Wasser und Luft, die mit einer Strahlzerlegungseinrichtung 5 in Form von zwei Lochplatten zusammenwirkt, in der das ankommende Wasser in Einzelstrahlen aufgeteilt wird. Das Gehäuse 2 besitzt im oberen Bereich des Gehäusemantels 6 Lufteintrittsöffnungen 7. Durch einen von den Einzelstrahlen erzeugten Unterdruck wird durch diese Öffnungen Luft angesaugt und durch die Vermischungseinrichtung mit dem Wasser vermischt. Die Vermischungseinrichtung 4 kann verschiedene Ausgestaltungen haben. Bei dieser Ausführung sind mehrere, ringförmig ausgebildete Treppen konzentrisch zueinander angeordnet.

Der Siebboden 3 besitzt Ausrittsöffnungen 8 für das Gemisch aus Wasser und Luft, wobei die einzelnen Öffnungen von dünnwandigen Strahlbegrenzungswandungen 9 umgeben sind, die im wesentlichen fluchtend zu massiven Teilen der Vermischungseinrichtung ausgerichtet sind. Bei der dargestellten Ausführungsform haben die Strahlbegrenzungswandungen 9 die Form von konzentrischen Ringen 10, die durch radiale Stege 11 miteinander verbunden sind. Die Wandstärke der Strahlbegrenzungswandungen beträgt in der Regel höchstens ca. 1 mm.

Ein zum Wasseraustrittsende weisender Abschnitt 12 des Siebbodens 3 beziehungsweise der Strahlbegrenzungswandungen 9 besteht aus einem Elastomer, beispielsweise Silikon, der durch Spritzen geformt ist. Seine Shore A Härte beträgt ca. 60 - 70. Der restliche Teil des Gehäuses, d.h. der der Strömungsrichtung entgegenweisende Teil des Siebbodens 3 und der Gehäusemantel 6 besteht aus einem formsteifen Thermoplast mit einer Shore A Härte von > 90, der mit dem Elastomer beim Zweikomponentenspritzen eine gute Haftverbindung auszubilden vermag. Die Länge der Abschnitte der Strahlbegrenzungswandungen 9, die aus dem Elastomer bestehen, beträgt etwa 2 bis 3 mm, wobei die Grenzfläche zwischen den elastomeren Abschnitten und den aus dem formstabilen Thermoplast bestehenden Abschnitten der Strahlbegrenzungswandungen in einer Querschnittsebene 55 quer zur Strömungsrichtung liegt. Lediglich im Bereich des Außenmantels 6 weist der aus dem formstabilen Thermoplast bestehende Wandungsabschnitt eine schmale, im Querschnitt rechteckige Rippe 13 auf, die gegenüber beiden Außenflächen des Wandungsabschnittes abgestuft ist. Aber auch hier besteht ein scharfer Übergang zwischen formstabilem Thermoplast und weichem Elastomer mit einer senkrecht zur Oberfläche liegenden Teilgrenzfläche. Durch diese Rippe 13 wird eine mechanische Versteifung des Ansatzes des elastomeren Abschnittes des Außenmantels 6 erreicht, die insbesondere dann erwünscht ist, wenn der elastomere Abschnitt im Außenmantelbereich etwas weiter hervorragt, als die anderen Wandungsabschnitte.

Dadurch, daß die Vermischungseinrichtung 4 als getrenntes Bauteil geformt ist und in das Gehäuse 2 eingesetzt ist, läßt sich das Gehäuse in einfacher Weise im Zweikomponentenspritzgießverfahren herstellen und zwar in einem zweikammerigen Werkzeug. Zuerst wird der aus dem formstabilen Kunststoff bestehende Gehäuseteil, d.h. im wesentlichen der Gehäusemantel und der entgegen der Strömungsrichtung weisende Teil des Siebbodens 3 gespritzt, wonach der aus dem elastomeren Kunststoff bestehende Teil des Siebbodens angespritzt wird. Hierzu kann der vorgefertigte Körper aus dem formstabilen Thermoplast in eine andere Kammer des Werkzeuges umgesetzt werden, wobei gleichzeitig in der ersten Kammer wieder ein neuer Grundkörper gebildet wird. Es ist auch möglich, ein Werkzeug so auszubilden, daß es nach dem ersten Spritzvorgang etwas auseinandergefahren wird und dann der elastomere Abschnitt angeformt wird.

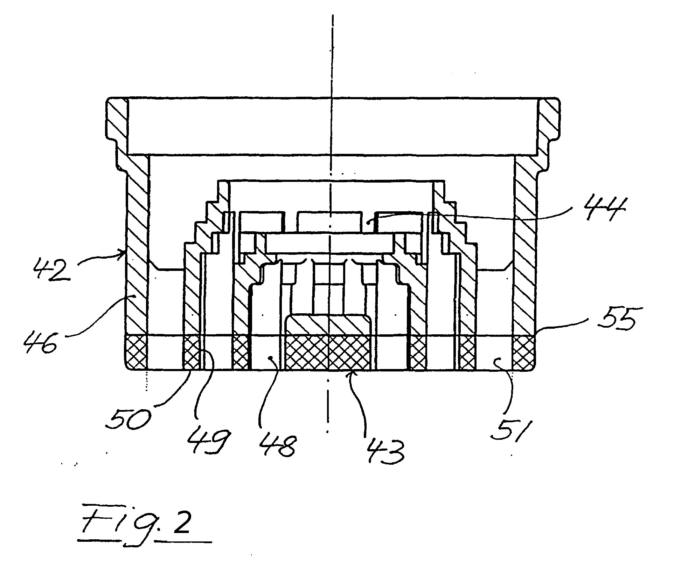

In Figur 2 ist ein Gehäuse 42 einer weiteren Ausführungsform dargestellt, das mit einer Vermischungseinreichtung 44 einstückig ausgebildet ist. Das Gehäuseoberteil und die Vermischungseinrichtung bestehen aus einem formstabilen Thermoplasten. In Strömungsrichtung weisende Abschnitte von Strahlbegrenzungswandungen 49, d.h. der am Wasseraustritt befindliche Teil des Siebbodens 43 besteht wiederum aus einem elastomeren Material, das im Zweikomponentenspritzverfahren an das formstabile, thermoplastische Material angespritzt ist. Da die Vermischungseinrichtung 44 und der Siebboden 43 einstückig ausgebildet sind, sind die Strahlbegrenzungswandungen 49 als Verlängerungen von entsprechenden Wandungsteilen der Vermischungseinrichtung 44 ausgebildet, wobei der Übergang ohne Querschnittsveränderung erfolgt. Die Grenzfläche 55 zwischen thermoplastischem Material und elastomerem Material liegt in der Querschnittsebene des Gehäuses 42. Dies bedeutet, daß der volle Querschnitt der Strahlbegrenzungswandungen 49 abrupt von dem einen Kunststoff in den anderen Kunststoff übergeht und die Flächenausdehnung der Grenzfläche 55 klein ist. Die Anbindung bzw. Grenzfläche kann auch wie bei Figur 1 sein.

Das Gehäuse 42 mit der einstückigen Ausbildung mit der Vermischungseinrichtung 44 ist in der Herstellung zwar etwas komplizierter als bei den Ausführungsformen nach den Figuren 1 und 2, hat allerdings den Vorteil, daß das Einlegeteil 4 nach Figur 1 nicht mehr als Einzelteil hergestellt und montiert werden muß. Wesentlich ist, daß auch hier die Vermischungseinrichtung aus einem formstabilen Kunststoff besteht und dadurch gewährleistet ist, daß die darauf treffenden Einzelstrahlen wirksam aufgespalten und mit der Luft vermischt werden, was bei einem weichen Material nicht der Fall ist. Auf der anderen Seite erlaubt auch diese Ausführungsform die Endstücke der Strahlbegrenzungswandungen 49 aus einem weichen, elastomeren Material herzustellen, so daß es möglich ist, die Wandungsendabschnitte zur Kalkentfernung bis zu einem Winkel von 90° oder mehr abzubiegen.

## Patentansprüche

1. Wasserstrahlbelüfter (1;21) für einen Wasserauslauf einer sanitären Armatur mit einem im wesentlichen topfförmigen Gehäuse (22;42;52) aus Kunststoff, in dem eine Einrichtung (4;24;44) zum Vermischen von Wasser mit Luft angeordnet ist, wobei das Gehäuse (2;22;42) einen mit ihm einstückig angeformten Gehäuseboden (3;23;43) aufweist, der als Strahlberuhigungseinrichtung ausgebildet ist und Wasseraustrittsöffnungen (8;28;48) zwischen parallel zur Strömungsrichtung angeordneten Strahlbegrenzungswandungen (9;29;49) besitzt, die am Wasseraustrittsende eine Oberfläche aus elastomerem Kunststoff aufweisen, **dadurch gekennzeichnet, dass** die Strahlbegrenzungswandungen (9;29;49) mindestens im Bereich des Wasseraustritts über ihre gesamte Wandstärke massiv aus dem elastomeren Kunststoff ausgebildet sind und einstückig mit dem Gehäuse (2;22;42) geformt sind und der restliche Teil des Gehäuses aus einem formsteifen Thermoplasten mit einer Shore A Härte von > 90 besteht.

2. Wasserstrahlbelüfter nach Anspruch 1, **dadurch gekennzeichnet, daß** der elastomere Kunststoff ein Thermoplastelastomer ist.

3. Wasserstrahlbelüfter nach Anspruch 1 oder 2, **dadurch gekennzeichnet, daß** die Strahlbegrenzungswandungen (9;29;49), in Strahlrichtung gesehen, über eine Länge von mindestens 1,0 mm, insbesondere 1,5 bis 4 mm aus dem elastomeren Kunststoff bestehen.

4. Wasserstrahlbelüfter nach einem der vorhergehenden Ansprüche, **dadurch gekennzeichnet, daß** die Strahlbegrenzungswandungen (9;29;49) im Bereich der Wasseraustrittsöffnungen (8;28;48) über eine Länge von 1,5 bis 3 mm aus dem elastomeren Kunststoff bestehen und der Rest des Gehäuses (2;22) aus dem formsteifen Thermoplasten und beide Kunststoffe durch Zweikomponentenspritzen geformt sind.

5. Wasserstrahlbelüfter nach einem der vorhergehenden Ansprüche, **dadurch gekennzeichnet, daß** die Vermischungseinrichtung (4;24) ein vom Gehäuse (2;22) getrennt ausgebildetes Bauteil ist.

6. Wasserstrahlbelüfter nach einem der vorhergehenden Ansprüche, **dadurch gekennzeichnet, daß** die Strahlvermischungseinrichtung (5;25) axial und radial fixiert im Gehäuse (2;22) gelagert ist.

7. Wasserstrahlbelüfter nach einem der vorhergehenden Ansprüche, **dadurch gekennzeichnet, daß** Grenzflächen (55) zwischen dem formsteifen, thermoplastischen Kunststoff und dem elastomeren Kunststoff in einer zur Strömungsrichtung senkrechten Querschnittsebene liegen.

8. Wasserstrahlbelüfter nach einem der vorhergehenden Ansprüche, **dadurch gekennzeichnet, daß** Grenzflächen (56) zwischen Wandungsabschnitten (9,6) aus dem formsteifen, thermoplastischen Kunststoff und Wandungsabschnitten aus dem elastomeren Kunststoff größer sind als die Querschnittsflächen durch die Wandungen.

9. Wasserstrahlbelüfter nach Anspruch 8, **dadurch gekennzeichnet, daß** Strahlbegrenzungswandungen (9,6) im Bereich der Grenzfläche (56) zwischen thermoplastischem Kunststoff und elastomerem Kunststoff abgestuft sind, insbesondere mindestens eine Stufe (13) aufweisen.

10. Wasserstrahlbelüfter nach Anspruch 8 oder 9, **dadurch gekennzeichnet, daß** Wandungsabschnitte (9,6) im Grenzflächenbereich (56) auf beiden Flächenseiten abgestuft sind.

11. Wasserstrahlbelüfter nach einem der Ansprüche 8 bis 10, **dadurch gekennzeichnet, daß** zum Außenmantel (6) des Gehäuses gehörende Wandungsabschnitte (9) eine vergrößerte Grenzfläche (56) aufweisen und zum Gehäuseboden (3) gehörende Wandungsabschnitte im wesentlichen senkrecht zur Strömungsrichtung verlaufende Grenzflächen (55) aufweisen.

## Claims

1. Water jet aerator (1; 21) for a water outlet of a sanitary fitting with a substantially cup-shaped housing (22; 42; 52) which is made of plastics material and in which a device (4; 24; 44) is arranged for mixing water with air, the housing (2; 22; 42) having a housing bottom (3; 23; 43) which is moulded-on in one piece therewith, is embodied as a jet stabilizing device and has water outlet openings (8; 28; 48) between jet limiting walls (9; 29; 49) which are arranged parallel to the direction of flow and have at the water outlet end a surface made of elastomeric plastics material, **characterized in that** the jet limiting walls (9; 29; 49), at least in the region of the water outlet, are formed solidly from the elastomeric plastics material over their entire wall thickness and are shaped in one piece with the housing (2; 22; 42), and the remainder of the housing is made of a dimensionally stable thermoplastic having a Shore A hardness of > 90.

2. Water jet aerator according to Claim 1, **characterized in that** the elastomeric plastics material is a thermoplastic elastomer.

3. Water jet aerator according to Claim 1 or 2, **characterized in that**, viewed in the jet direction, the jet limiting walls (9; 29; 49) are made over a length of at least 1.0 mm, in particular 1.5 to 4 mm, of the elastomeric plastics material.

4. Water jet aerator according to one of the preceding claims, **characterized in that**, in the region of the water outlet openings (8; 28; 48), the water jet limiting walls (9; 29; 49) are made of the elastomeric plastics material over a length of 1.5 to 3 mm and the remainder of the housing (2; 22) is made of the dimensionally rigid thermoplastic and both plastics materials are shaped by two-component injection moulding.

5. Water jet aerator according to one of the preceding claims, **characterized in that** the mixing device (4; 24) is a component embodied separately from the housing (2; 22).

6. Water jet aerator according to one of the preceding claims, **characterized in that** the jet mixing device (5; 25) is mounted in an axially and radially fixed manner in the housing (2; 22).

7. Water jet aerator according to one of the preceding claims, **characterized in that** interfaces (55) between the dimensionally rigid, thermoplastic polymer and the elastomeric plastics material are positioned in a cross-sectional plane perpendicular to the direction of flow.

8. Water jet aerator according to one of the preceding claims, **characterized in that** interfaces (56) between wall portions (9, 6) made of the dimensionally rigid, thermoplastic polymer and wall portions made of the elastomeric plastics material are larger than the cross-sectional areas through the walls.

9. Water jet aerator according to Claim 8, **characterized in that** jet limiting walls (9, 6) in the region of the interface (56) between the thermoplastic polymer and elastomeric plastics material are tiered, in particular have at least one tier (13).

10. Water jet aerator according to Claim 8 or 9, **characterized in that** wall portions (9, 6) in the interface region (56) are tiered on both face sides.

11. Water jet aerator according to one of Claims 8 to 10, **characterized in that** wall portions (9) pertaining to the outer jacket (6) of the housing have an enlarged interface (56) and wall portions pertaining to the housing bottom (3) have interfaces (55) running substantially perpendicularly to the direction of flow.

## Revendications

1. Aérateur de jet d'eau (1; 21) pour une sortie d'eau d'une armature sanitaire avec un boîtier (22; 42; 52) essentiellement en forme de godet en matière plastique, dans lequel est disposé un système (4; 24; 44) pour le mélange d'eau avec de l'air, dans lequel le boîtier (2; 22; 42) présente un fond de boîtier (3; 23; 43) formé d'une pièce avec lui, qui se présente sous la forme d'un système de calmage du jet et comporte des ouvertures de sortie d'eau (8; 28; 48) entre des parois de limitation du jet (9; 29; 49) disposées parallèlement à la direction d'écoulement, qui présentent une surface en matière plastique élastomère à l'extrémité de sortie de l'eau, **caractérisé en ce que** les parois de limitation du jet (9; 29; 49) sont réalisées en matière plastique élastomère massive sur toute leur épaisseur de paroi au moins dans la région de sortie de l'eau et sont formées d'une pièce avec le boîtier (2; 22; 42) et la partie restante du boîtier est composée d'un thermoplastique indéformable avec une dureté Shore A > 90.

2. Aérateur de jet d'eau selon la revendication 1, **caractérisé en ce que** la matière plastique élastomère est un élastomère thermoplastique.

3. Aérateur de jet d'eau selon la revendication 1 ou 2, **caractérisé en ce que** les parois de limitation du jet (9; 29; 49), vues dans la direction du jet, sont composées de la matière plastique élastomère sur une longueur d'au moins 1,0 mm, en particulier de 1,5 à 4 mm.

4. Aérateur de jet selon l'une quelconque des revendications précédentes, **caractérisé en ce que** les parois de limitation du jet (9; 29; 49) sont composées de la matière plastique élastomère sur une longueur de 1,5 à 3 mm dans la région des ouvertures de sortie de l'eau (8; 28; 48) et le reste du boîtier (2; 22) en thermoplastique indéformable et les deux matières plastiques sont moulés par injection à deux composants.

5. Aérateur de jet selon l'une quelconque des revendications précédentes, **caractérisé en ce que** le système de mélange (4; 24) est un composant formé séparément du boîtier (2; 22).

6. Aérateur de jet selon l'une quelconque des revendications précédentes, **caractérisé en ce que** le système de mélange de jet (5; 25) est fixé axialement et radialement dans le boîtier (2; 22).

7. Aérateur de jet selon l'une quelconque des revendications précédentes, **caractérisé en ce que** des faces limites (55) entre la matière plastique thermoplastique indéformable et la matière plastique élastomère sont situées dans un plan transversal perpendiculaire à la direction d'écoulement.

8. Aérateur de jet selon l'une quelconque des revendications précédentes, **caractérisé en ce que** des faces limites (56) entre des parties de paroi (9, 6) constituées de la matière plastique thermoplastique indéformable et des parties de paroi constituées de la matière plastique élastomère sont plus grandes que les surfaces de section transversale à travers les parois.

9. Aérateur de jet selon la revendication 8, **caractérisé en ce que** des parois de limitation du jet (9, 6) sont étagées, en particulier présentent au moins un gradin (13), dans la région de la face limite (56) entre la matière plastique thermoplastique et la matière plastique élastomère.

10. Aérateur de jet selon la revendication 8 ou 9, **caractérisé en ce que** des parties de paroi (9, 6) sont étagées sur les deux côtés de la face dans la région de la face limite (56).

11. Aérateur de jet selon l'une quelconque des revendications 8 à 10, **caractérisé en ce que** des parties de paroi (9) appartenant à l'enveloppe extérieure (6) du boîtier présentent une face limite agrandie (56) et des parties de paroi appartenant au fond de boîtier (3) présentent des faces limites (55) s'étendant sensiblement perpendiculairement à la direction d'écoulement.
